# EUROPEAN PATENT APPLICATION

(11) **EP 3 626 441 A1**
(43) Date of publication of application: **25.03.2020**
(21) Application number: 19197930.1
(22) Date of filing: 18.09.2019
(51) Int. Cl.: B29D 35/14, B29C 45/14, B29D 35/00, B29L 31/50, A43B 9/00

(54) **MULTI-PART CLAMPING BASE STAMP FOR DIRECT INJECTION OF MULTI-LAYERED SHOE SOLES**

(30) Priority: 18.09.2018 EP 18195193
(71) Applicant: DESMA Schuhmaschinen GmbH, 28832 Achim (DE)
(72) Inventor: Remmele, Uwe, 28213 Bremen (DE)
(74) Representative: Hertin und Partner Rechts- und Patentanwälte PartG mbB

(57) **Abstract**

The invention relates to a device for manufacturing a shoe sole and/or a shoe. In one aspect, the invention concerns a device comprising a clamping base stamp, the base stamp having a support plate (2) for deposition of an outer shoe sole, the support plate (2) comprising a first clamping edge at the rim of the support plate (2), and a sealing plate (5), which is positioned, at least in some regions, around the support plate (2) and has a second clamping edge, which can be closed flush with the first clamping edge of the support plate (2). Before applying the midsole (8) material, the edge of the outer shoe sole is then clamped, at least in areas, between the first clamping edge (22) of the supporting plate and the second clamping edge (7) of sealing plate (5). This allows the join formed by the outer sole (6) and the sealing plate (5) to be sealed in a material tight manner. When the mold form is then closed from above by an upper closing element (10) and a lateral mold frame, material can be injected and foamed (possibly under high pressure) without the material escaping between the sealing plate (5) and the outer sole (6), thus avoiding unwanted midsole material accumulating under the outer sole (6). The invention also concerns, in other aspects, a corresponding clamping base stamp, a mold frame, a direct injection process machinery and a manufacturing process, based on the clamping base stamp described herein.

## Description

The invention relates to a device for manufacturing a shoe sole and/or a shoe.

In one aspect, the invention concerns a device comprising a clamping base stamp, the base stamp having a support plate for deposition of an outer shoe sole, the support plate comprising a first clamping edge at the rim of the support plate, and a sealing plate, which is positioned, at least in some regions, around the support plate and has a second clamping edge, which can be closed flush with the first clamping edge of the support plate. Before applying, for example, the midsole material, the edge of the outer shoe sole is then clamped, at least in areas, between the first clamping edge of the support plate and the second clamping edge of sealing plate. This allows the join formed by the outer sole and the sealing plate to be sealed in a material tight manner. When the mold form is then closed from above by an upper closing element and a lateral mold frame, material can be injected and foamed (optionally under high pressure) without the material escaping between the sealing plate and the outer sole, thus avoiding unwanted midsole material accumulating under the outer sole.

The invention also concerns, in other aspects, a corresponding clamping base stamp, a mold frame, a direct injection process machinery and a manufacturing process, based on the clamping base stamp described herein.

### BACKGROUND

Injection molding is a technology commonly used for high-volume manufacturing of items made of thermoplastic or foam material, most commonly thermoplastic polymers. During a typical injection molding process, a molding material, for example a polyurethane foam, is forcefully injected into a mold cavity formed by an injection molding form having a particular cavity shape. The injected molding material is held under pressure in the mold cavity, cooled, and then removed as a solidified part having a shape that essentially duplicates the cavity shape of the mold. Injection molding can preferably be used for the manufacture of shoe soles or parts thereof.

Injection molded shoe soles can be produced very efficiently and exhibit a high quality as well as comfort for the wearer. In order to produce the desired comfort, the shoe sole often encompasses foam of certain properties, preferably comprising a quantity of air contained within the foamed material of the sole in order to increase the damping effect of the sole.

The current state-of-the-art process for the production of three-layered, directly soled shoe soles comprises the following steps:
First, an outer shoe sole or outer shoe sole patches (usually rubber or TPU) is pre-produced.

In the next step, polyurethane is poured/injected over the pre-produced outer sole for the midsole. This requires a separate machine for the polyurethane casting process and a corresponding special mold.

Standard forms preferably consist of three parts with different functions:
1. The base plate (of the mold form) carries the inlaid outer sole.
2. Lateral mold frames form lateral mold cavity walls. The lateral mold frame also contains the shaping geometry (the side design) of the lower polyurethane layer midsole.
3. An upper closing element, such as a closing plate, for example a dummy last, is lowered to a position above the base plate and closing with the lateral mold frames from above, e.g. after pouring, to close the cavity of the mold frame. The base plate and/or areas of the lateral mold frame contour the outer sole, nevertheless some of the poured midsole material can reach lateral areas of the outer sole and/or areas below the outer sole, which have to be trimmed manually before further processing of the sole.
4. Once the polyurethane has reacted, the semi-finished sole (consisting of the outer sole and the cast-on lower layer of polyurethane (a two-layer insole or the midsole of a three-layer sole)) is removed from the mold. This can cause mechanical stress, deformation and/or shrinking of the sole. Furthermore, as a rule, the semi-finished sole must then be further machined. In particular, the cast out (for example injected material that has escaped) of the outer sole/lower layer of polyurethane must be trimmed so that the assembly can later be inserted into the base stamp of the direct soling mold. This trimming of the sole along the edge is done manually. The problem here is that even the smallest deviations/damage at the edge of the sole caused by the trimming lead to so-called under-spraying when the next PU layer is applied. The PU for the insole, which is applied to the inlaid two-layer sole, is pressed under the mid- and outer sole in the mold at the points where the edge of the outer sole/midsole was "damaged" by manual trimming when the insole reacts.

Thus, the (manual) reworking/trimming of the cast out from the midsole that was applied to the outer sole is necessary and a hindrance in prior art processes. This is due to the lack of sealing of the mold along the edges of the inlaid outer sole. In addition, defects are caused due to "under-spraying", when applying or foaming a next layer of synthetic sole material onto the midsole (e.g. the inner sole). This so-called "under-spraying" often results in a rejection of the product and/or a special sale of the product at a reduced price.

The lack of a seal around the outer sole laid upon the base plate of the mold form therefore makes production more complex, more time intensive and ultimately costlier, because the mechanical (optionally automated) production process must be interrupted for manual trimming.

### SUMMARY OF THE INVENTION

The purpose of the invention is to provide a device for manufacturing a shoe sole and/or a shoe and a manufacturing process for shoes and/or shoe soles which do not have the disadvantages of the state of the art.

In particular, the device and process of the invention are intended to enable efficient, automated, simple and cost-effective production of shoes and/or shoe soles without (or with fewer) manual intermediate steps on a single machine, thereby minimizing manual reworking. In a further aspect, the invention seeks to provide means to prevent or reduce cast out (injected material that has escaped) along the edge of the outer sole, when laid inside the cavity of the mold form.

In one aspect, the invention relates to an apparatus comprising a clamping multi-part base stamp of a mold frame for a direct injection process machinery (DIP machinery) and/or a direct soling machine, wherein the clamping base stamp comprises:
- (at least one) a support plate for deposition of an outer sole, the support plate comprising a first clamping edge at the rim of the support plate; and
- a sealing plate which is positioned (preferably flush), at least in some regions, around the support plate and which has a second clamping edge (a sealing surface) , which can be closed flush with the first clamping edge of the support plate (directly or indirectly, preferably indirectly via the outer sole lying between the first and second clamping edges).

The mold frame is preferably used for production of a shoe with preferably a multi-layer sole, comprising preferably at least two layers, for example the outer sole on the bottom of a shoe and the insole. In some embodiments, more preferably, the sole comprises three layers, the outer sole, an additional midsole and the insole. In some embodiments, the injected midsole or the insole is covered by a further inlay sole, which may in direct contact with the foot or sock. Employing the present invention can therefore lead to highly individualized shoe soles with favorable characteristics.

The mold frame preferably consists of several elements:
1. The base stamp which carries the inlaid outer sole on the support plate. Typically, the upward facing surface of the support plate and/or the outer sole on the support plate form the lower exterior surface of the mold cavity.
2. The lateral mold frame preferably forming the lateral mold cavity walls. For this, the lateral mold frame can be preferably closed flush around the base stamp. The lateral mold frame also contains the shaping geometry (the side design) of the lower polyurethane layer / midsole. The lateral mold frame preferably comprises two frame halves, also described as side molding elements, which can be displaced laterally in order to open or close the mold cavity laterally.
3. Depending on whether a midsole or an insole is produced, the cavity can preferably either be closed from above by an upper closing element (for production of the midsole) or a last with a shoe upper for production of the insole comprising a direct soling process of the shoe upper. The upper closing element can preferably be also described as displacer plate or displacement plate.

The general production process can preferably be shortly described as follows:
- Deposition of the outer sole on the support plate
- Closing the cavity laterally by the lateral mold frame.
- Then, when an injection and/or foaming process is involved and a midsole is produced, the cavity is closed from above by the upper closing element and the injection/foaming starts. Otherwise, the material of the midsole is poured into the mold before closing the mold from above by the upper closing element.
- For the production of the insole, the process is similar, the mold is closed laterally and then from above by the last with the shoe upper, either prior to injection/foaming of the insole material or after the insole material is poured/cast into the cavity.

As described above, it is highly undesirable that any of the applied sole material reaches areas of the bottom of the outer sole or the edges of the outer sole, since any such cast out has to be removed (manually) prior to the next production process. Furthermore, defects can result, which can lead to total loss of the produced shoe when the insole is applied.

Therefore, the sealing plate is used, which surrounds the support plate, preferably contouring the support plate. The sealing plate and the support plate each feature a particular shape for clamping the outer edges of the outer sole in between and sealing these edges with respect to the mold cavity. Like this, no unwanted material can reach areas at the clamped/sealed edges and the areas on the bottom beyond the clamped/sealed areas.

For this, the support plate features a first clamping edge at the rim of the support plate and as a preferably matching counterpart, the sealing plate features a second clamping edge, also described as sealing surface. Both terms can preferably be used equivalently, sealing surface can in particular be more descriptive when this element comprises an extensive, approximately flat surface, which is preferred in some cases. The respective clamping edges can surround the outer sole entirely. It can also be preferred that the outer sole is not surrounded entirely, but at least in some areas.

In particular, first and second clamping edges can be brought to one another such that they feature a spacing in between such that an outer area or edge of the outer sole can be positioned flush within the spacing. Like this, there is preferably essentially no more room for any material applied onto the outer sole which can reach or pass the spacing and the outer sole areas within the spacing.

The spacing is preferably composed of the support plate from below, in particular the first clamping edge of the support plate, a lateral section of the sealing edge from one side, the lateral section preferably being comprised in the second clamping edge and from above a respectively formed section of the second clamping edge, which can e.g. be essentially parallel to the first clamping edge. To one side, the section is preferably open such that the non-clamped parts of the outer sole can extend to this side. Preferably, all elements of the support plate and/or the sealing plate forming the spacing are described as clamping elements.

Preferably, sealing plate and support plate are moveable with respect to each other such that both clamping edges can be brought together to achieve the clamping/sealing or can be moved away from each other, e.g. for facilitation of the deposition/removal of an outer sole before/after clamping. Like this, an "active clamping" can preferably be achieved by setting the distance to the thickness of the outer sole when clamping. Preferably, the distance can also be set to a distance slightly below the thickness of the outer sole, in particular when the sole is made from elastic material, as is often the case. Like this, a clamping/sealing effect can be further improved.

The second clamping edge of the sealing plate can preferably be closed flush with the first clamping edge of the support plate, indirectly, preferably via the outer sole lying between the clamping edges, as has been described, but preferably also directly, when e.g. no outer sole is deposited on the support plate and/or clamped. For this reason, the support plate and the sealing edge are preferably moveable with respect to each other and both clamping edges can preferably be also brought to a distance to one another, which is preferably approximately "0" when there is no outer sole to be clamped.

It could also be preferred that at least one clamping edge is made from elastic material or similar such that the clamping edges can be brought flush to another either directly or indirectly because of the resulting spring-like behavior of at least one edge, which makes it flexible for putting the outer sole in between both clamping edges.

Preferably, the first and second clamping edge can clamp the (outer) edge areas of the outer sole similar to gripping jaws of a plier.

The first clamping edge of the support plate can preferably just be a section of the support plate which interacts with the second clamping edge of the sealing plate, which itself can e.g. comprise a nib or a similarly adapted shape. The first clamping edge can preferably also have a distinct form, e.g. of an edge or a surface, which is particularly adapted to interact with the second clamping edge.

The support plate preferably has approximately an outline similar/identical to the outline of the outer sole. The outer sole can preferably have an outline similar to the outline of the shoe. Preferably, the outline can also be of a similar and/or different shape, but smaller or bigger than the outline of a shoe. It can also be preferred that the outline of the outer sole resembles only partly the outline of the shoe and/or the outer sole comprises a recess or more than one outer sole patches. In this case, the support plate is preferably similarly outlined than the outer sole as well and can e.g. comprise more than one support plate, one for each patch.

The sealing plate is positioned, preferably flush, at least in some regions, around the support plate. This means that also in the case of more than one support plate, each support plate outline can be surrounded by the sealing plate. Thus, the sealing plate can preferably simply have an outline as the shoe with a standard outer sole, but it can e.g. also outline several (e.g. two) support plates when the outer sole comes in the form of more than one (e.g. two) patches.

The sealing plate preferably comprises at least in some regions an outer lateral section approximately reproducing the (lateral) outline of the shoe.

The sealing plate of the base stamp sits on the inlaid outer sole and seals on the edge and/or the cast out of the outer sole so that during the casting process (or foaming/injection of the polyurethane) no polyurethane gets under the sole (sealing function). The ring plate/sealing plate also preferably partly contains the shaping geometry (the side design) of the lower polyurethane layer / midsole.

It should be noted that although the device and all other aspects of the invention described herein are preferably referring to a production of a shoe with a three-layer sole, also two layer soles or any kind of particular soles (and the respective shoes) can preferably be fabricated. One advantage of the device presented herein is that due to the clamping/sealing elements, areas at the outer (or inner) edges the outer sole can be sealed from any material applied onto it during production.

In an alternative embodiment of the invention, the sealing plate can be a ring plate.

In a preferred embodiment of the invention, the support plate and the sealing plate are configured to clamp (preferably material-tight) the edge region of an outer sole between the first clamping edge at the rim of the support plate and the second clamping edge (sealing surface) of the sealing plate, preferably at least in some regions.

In a further preferred embodiment of the invention, the support plate comprises an upper support area and a guiding region on an outer lateral surface and wherein at least in some regions the first clamping edge is positioned between the support area and the guiding region;
wherein the sealing plate comprises on an inner lateral surface (at least one) guiding element (ring) and an inwardly facing upper mold section (ring) and wherein at least in some regions the second clamping edge between the guiding element and the upper mold section;
wherein the support plate and the sealing plate are positioned by the guiding region and the guiding element, such that they can be displaced relative to each other, preferably in the vertical direction,
wherein the support plate and sealing plate are preferably configured for a relative movement between an open position of the base stamp and a closed position of the base stamp,
wherein in the open position a distance between the first clamping edge and the second clamping edge is maximal and is suitable for deposition of the outer sole onto the support area and the first clamping edge,
wherein, in the closed position, a distance between the first clamping edge and the second clamping edge is minimal and suitable for at least in some regions clamping (and preferably sealing) of the edge region of the outer sole between the first and second clamping edges, and wherein, in the closed position, one or more internal walls of a cavity within the mold form are formed by non-clamped portions of the upper surface of the outer sole and the mold section.

This embodiment describes a possible arrangement of sealing plate and support plate such that they are guided and/or moveable with respect to each other. The upper support area preferably represents the "surface" where the outer sole is essentially positioned. The guiding region is preferably arranged laterally below the outline of the upper molding area and is preferably configured for guiding the corresponding guiding element of the sealing plate, which is preferably surrounding it. The (first) clamping edge is preferably situated at the transition between upper support area and guiding region.

The sealing plate is preferably designed correspondingly: The guiding element preferably surrounds the guiding region of the support plate (preferably flush), such that both elements are in particular slidingly moveable with respect to each other. Above the guiding element, there is preferably the clamping edge. The clamping edge preferably also naturally limits the movability of the support plate and the sealing element with respect to each other at least in one direction. Further above/beyond the clamping edge, preferably directly limiting the exterior surface of the mold cavity, there preferably is the (upper) mold section, which is thus in particular directly involved in the shaping of the produced sole, in particular laterally and/or at least in some regions. Since the mold section is preferably a closed contouring surface, the produced (mid-) sole can advantageously be produced seamless, at least in some regions.

Since there can preferably be more than one support plate, the sealing plate can preferably exhibit also more than one guiding element in this case.

In a further preferred embodiment of the invention, the distance between the first clamping edge and the second clamping edge (preferably in the molding position) is 5 to 100 mm, preferably 5 mm to 40 mm, for the open position and/or exhibits a distance of 0 to 5 mm (e.g. the thickness of the outer sole), preferably 0.5 mm to 4.5 mm, for the closed position.

In a further preferred embodiment of the invention, the lifting cylinder is configured for a translational movement of the support plate relative to the sealing plate and/or the lifting cylinder is configured for a translational movement of the sealing plate relative to the support plate. Preferably, the lifting cylinder can be any element for bringing the support plate and sealing plate together, wherein the support and sealing plates are held/pressed towards each other preferably during the injection/foaming/casting process. The lifting cylinder can for example be mechanically driven, hydraulically driven and/or pneumatically driven.

In a further preferred embodiment of the invention, the apparatus comprises
- (at least) one/a base plate
- preferably at least one bridge plate,
wherein the lifting cylinder is configured for a translational movement of the sealing plate, the support plate is installed on the base plate, the base plate preferably has at least one guiding region for the lifting cylinder and the bridge plate is preferably connected to the lifting cylinder and is configured for a transmission of movement from the lifting cylinder to the sealing plate.

In a further preferred embodiment of the invention, the support plate, bridge plate and/or base plate are configured to limit/and or control the translational movement of the sealing plate between the open position and the closed position.

For the described embodiments, when the lifting cylinder lifts the sealing plate via the bridge plate, at first, the sealing plate is lifted until e. g. the bridge plate reaches the base plate and/or support plate from below. This preferably limits the relative movement of support plate and sealing plate in one direction. When the lifting cylinder continues to apply a lifting force, preferably the complete base stamp is lifted in a simultaneous movement of the comprised elements.

In a further preferred embodiment of the invention, the mold section has a shape that provides geometry for an outer surface of a foamable, pourable and/or injectable midsole in the mold cavity, preferably at least partially.

It is preferred that the lateral mold frame provides geometry for parts of the outer surface of the midsole which are possibly not provided by the mold section.

Intermediate sole can preferably be also described as midsole.

In a further preferred embodiment of the invention, the clamping base stamp comprises:
- a recess in the support plate with a third, preferably surrounding, clamping edge at the rim of the recess; and
- an additional clamping element/clamping surface which is positioned (preferably flush) in the recess and has a fourth clamping edge (a second sealing surface) which can be closed flush with the third clamping edge (directly or indirectly, preferably indirectly via the outer sole positioned between the clamping edges).

In order to clamp also an inner edge of a recess of an outer sole at least partially, this additional clamping element is positioned flush in the recess. The clamping principle works preferably in complete analogy to the described embodiment for clamping the outer edge regions of an outer sole. This embodiment is particularly useful for clamping an outer sole with at least one recess or hole in it. The clamping element can then preferably be used for clamping the surrounding edge of the recess or hole.

It is clear to a skilled person that the additional clamping element comprises at least one additional clamping element. There can preferably be 1, 2, 3, 4, 5 or more additional clamping elements involved, depending on the specific design of the outer sole.

In a further preferred embodiment of the invention, the clamping element is configured to clamp (preferably material-tight) the edge region surrounding an opening in the outer sole (and/or a recess in the outer sole) between the second sealing surface (fourth clamping edge) and the third, preferably surrounding, clamping edge at the rim of the recess in the support plate.

In a further preferred embodiment of the invention, the recess of the support plate comprises an opening in the support area and a second guiding region on the inside of the recess, and wherein the third, preferably circumferential clamping edge between the support area and the second guiding region;
the clamping element comprises on the outside a second guiding element and an outwardly facing second upper mold section, and wherein a fourth, preferably surrounding, clamping edge is positioned between the second guiding element and the second mold section;
wherein the clamping element and the support plate are guided to slide relative to each other by the second guiding element of the clamping element in the second guiding region of the recess, wherein the support plate and the clamping element are configured for relative movement between the open position of the base stamp and the closed position of the base stamp, wherein, in the open position, a distance between the third clamping edge and the fourth clamping edge is maximal and is suitable for a deposition of the outer sole and/or outer sole patches (patches being used as parts of the outer sole) onto the support area, the first clamping edge and the third clamping edge,
wherein, in the closed position, a distance between the third clamping edge and the fourth clamping edge is minimal and is suitable for clamping at least in some regions the edge region of the outer sole between the third and the fourth clamping edges, in particular the edge region surrounding the opening in the outer sole and/or the recess in the outer sole.

This embodiment preferably works in complete analogy to the similar embodiment for guiding/moving the sealing plate with respect to the support plate and is particularly advantageous for sealing and/or clamping of the edge regions of a recess and/or hole in the outer sole, which cannot be clamped directly by the sealing plate which contours the support plate on its outer contour.

It can be preferred that the sealing element and the clamping element are connected and can be moved together. It is particularly preferred that both elements are fabricated out of a single work piece and/or material.

In a further aspect the invention relates to a base stamp as described herein. For example, in some embodiments the term device comprising a clamping multi-part base stamp, may be considered as the base stamp itself.

The skilled person acknowledges that definitions, embodiments and advantages of the inventive apparatus also apply to the inventive base stamp.

In a further aspect, the invention relates to a mold frame for use in a direct soling machine comprising a device/an apparatus as described herein or a clamping base stamp as described herein and an upper closing element,
wherein the upper closing element is configured, together with the device or the clamping base stamp, preferably in a closed position with the deposited outer sole, to form the mold cavity of the mold frame.

The upper closing element can preferably also be referred to as displacement plate, displacement element or similar.

The skilled person acknowledges that definitions, embodiments and advantages of the inventive apparatus also apply to the molding frame.

The mold frame is preferably also referred to as molding frame.

Upper closing element (and preferably also the last for the shoe upper described herein) is preferably swung (rotated) in and/or out of the mold cavity. Preferably, the before approaching the other elements of the mold frame, the swinging is changed to a vertical movement in order not to apply any unwanted forces, in particular sheer forces, to any shoe sole material of the mold frame, which could e.g. cause deformation or derange the positioning of any involved components.

In a preferred embodiment of the invention, the mold frame comprises a sprue for injecting a midsole material into the cavity.

It is further preferred that that there is an opening in the mold frame for the sprue which is configured such that the opening is closed when the base stamp is raised, resulting in the termination of the injection/pouring process.

In a further preferred embodiment of the invention, the upper closing element comprises on an external surface, preferably facing the mold cavity thereby forming an inner surface of the cavity, additional sections with sealing surfaces to separate different areas of the midsole comprising different components and/or mixtures of components having specific physical properties.

In a further preferred embodiment of the invention, lateral mold frames are comprised,
wherein the lateral mold frames are configured for injecting a foamable material of an inner sole and/or direct adhesive foaming (direct soling) of a shoe upper to the sole.

It is particularly preferred that the lateral mold frame comprises two elements, referred to herein also as the side molding elements or frame halves.

The lateral areas of the midsole can preferably also be shaped by the lateral mold frame.

The lateral mold frame is preferably moved with respect to the other element by lateral movements without a hinging and/or rotating movement. Therefore, preferably no unwanted forces, in particular sheer forces, are applied to the sole material by the lateral mold frame.

The lateral mold frame preferably also guides/centers the upper closing element when closing the cavity.

In a further aspect, the invention relates to a direct injection process machinery and/or a direct soling machine comprising a device/an apparatus as described herein, a clamping base stamp as described herein and/or a mold frame as described herein.

The skilled person acknowledges that definitions, embodiments and advantages of the inventive apparatus or other inventive aspects also apply to the inventive direct injection process machinery and/or a direct soling machine.

In a preferred embodiment of the invention, an injection unit is comprised, wherein the injection unit comprises a mixing head for mixing and application of base material of a midsole material which is to be mixed with additives into the mold frame, whereby the midsole can preferably comprise different areas comprising different components and/or mixtures of components with specific physical properties.

In one embodiment, different materials comprising various synthetic materials or additives duroplastic and/or thermoplastic synthetic components (such as base materials and additives, which may be polymerizable and/or foamable) may be poured and/or injected in a particular order through a mixing head, thereby injecting the various components or mixtures thereof into distinct sectors. Multiple components may be provided into the mixing head, where they are subsequently mixed to provide a homogenous or semi-homogenous solution, before being injected or poured in a controlled order into the form cavity of the shoe sole.

In order to produce such shoe soles a commonly available mixing head may be applied, which is preferably assembled with a rotating extruder screw, whereby the extruder screw ends in a nozzle from which the synthetic material is injected and/or poured into the shoe sole form cavity. Preferably, the injection is accomplished via the sprue. The synthetic material may be added to the screw with any given additives, mixed and subsequently excluded into the cavity. Various channels may be present for introducing multiple, potentially different, synthetic materials with or without various additives into the extruder screw via multiple valves. Various valves could be attached to mixing head with an appropriate control program, thereby allowing precise control of which material is injected and/or poured into which shoe sole sector. A software is capable of controlling the valves in order to regulate which valve opening corresponding to the various synthetic materials is applied to the extruder.

In a further aspect, the invention relates to a method for manufacturing a shoe and/or a shoe sole, preferably by a device/an apparatus as described herein, a clamping base stamp as described herein, a mold frame as described herein and/or a direct injection process machinery and/or direct soling machine as described herein, comprising the following steps:
- deposition of an outer sole, patches and/or outer sole fragments on a support plate, preferably in an open position of the base stamp;
- clamping the outer sole, patches and/or outer sole fragments (preferably material-tight) and preferably sealing the outer boundary of the mold cavity of the mold frame formed by the unclamped regions of the upper surface of the outer sole and the mold element, preferably in a closed position of the base stamp.

The skilled person acknowledges that definitions, embodiments and advantages of the inventive apparatus or other inventive aspects also apply to the inventive method.

Preferably, as a default and/or starting configuration, the base stamp is in an open position, the lateral mold frame is opened, the last and/or the upper closing element is in a lifted position and the upper closing element is preferably oriented to the bottom and/or the mold frame.

In a preferred embodiment of the invention, for injecting and/or foaming of the midsole, the following steps are comprised:
- closing of, preferably by swinging down, the upper closing element;
- closing the mold cavity by the lateral mold frame;
- injecting and/or foaming a thermosetting, thermoplastic and/or elastomeric synthetic material, preferably based on polyol and isocyanate, in particular (to form) polyurethane, for the midsole;
- preferably raising of the base stamp and/or closing of the sprue;
- preferably curing the midsole material;
- preferably opening the mold cavity by opening of the mold frame;
- preferably (vertically) lifting of, preferably by swinging out, the upper closing element.

In a further preferred embodiment of the invention, for a pouring of the midsole, the following steps are comprised:
- closing the mold cavity by the lateral mold frame;
- preferably raising the base stamp;
- pouring of a thermosetting, thermoplastic and/or elastomeric synthetic material, preferably based on polyol and isocyanate, in particular (to form) polyurethane, for the midsole;
- closing of, preferably by swinging down, the upper closing element;
- preferably curing the midsole;
- preferably (vertically) lifting of, preferably by swinging out, the upper closing element;
- preferably lowering of the base stamp;
- preferably opening the lateral mold frame.

In a further preferred embodiment of the invention, for an injecting and/or foaming an insole, the following steps are comprised:
- swinging in and/or lowering of a shoe upper on a last and preferably closing of the lateral mold frames with the shoe upper on the last;
- injecting and/or foaming of a thermosetting, thermoplastic and/or elastomeric synthetic material, preferably based on polyol and isocyanate, in particular (to form) polyurethane for the insole and a preferred direct adhesive foaming (direct soling) of the shoe upper (to the sole);
- preferably raising of the base stamp and/or closing of the sprue;
- preferably curing of the insole;
- preferably opening the base stamp into an open position;
- preferably lowering the base stamp, opening the lateral mold frames, lifting of the last including the directly soled shoe (upper), preferably swinging out, (termed at times demolding) and removal of the shoe;
- preferably post-processing of the shoe sole.

In a further preferred embodiment of the invention, for a pouring an insole, the following steps are comprised:
- closing the mold cavity by the lateral mold frame;
- preferably raising of the base stamp;
- pouring of a thermosetting, thermoplastic and/or elastomeric synthetic material, preferably based on polyol and isocyanate, in particular (to form) polyurethane for the insole and a preferred direct adhesive foaming (direct soling) of the shoe upper (to the sole);
- closing of the mold cavity, preferably by swinging in and/or lowering of a (shoe) upper on a last;
- preferably curing the insole;
- preferably opening the base stamp into an open position;
- preferably lowering the base stamp, opening the lateral mold frame, lifting of the last including the directly soled shoe upper, preferably by swinging out, and removal of the shoe;
- preferably post-processing of the shoe sole.

The ingenious clamping base stamp comprises a support plate with an outer clamping edge and a ring/sealing plate with an outer sealing surface. An outer sole can be placed on the support plate. To insert the midsole material (foam), the edge of the outer sole is then clamped at least in areas between the clamping edge and the sealing surface. This allows the space formed by the outsole and the ring plate to be sealed. If the mold is closed from above by a displacer plate, preferably also described as upper closing element, material can also be injected and foamed under high pressure without the material getting between the sealing surface and the outer sole and causing cast out, which must be removed manually.

The invention is preferably a novel mold concept comprising an upper closing element, a base stamp system, a lateral mold frame and preferably a last for the shoe upper, which allows the production of a three-layer sole (consisting of an inlaid rubber or TPU outer sole or outer sole patches, a lower layer of polyurethane as a cushioning midsole and an upper layer of polyurethane as an insole for the manufacturer of a connection with the material of the shoe upper) directly on a direct-soling machine. The shape concept is called a "split base stamp" (two-part base mold), but the terms "clamping base stamp" or "clamp base stamp" are also used.

### Further preferred embodiments of the invention:

Further disclosed is an apparatus comprising a clamping multi-part (split) base stamp of a mold frame for use in a Direct Injection Process Machinery (DIP Machinery) and/or a Direct Soling Machine, wherein the clamping base stamp comprises:
- a support plate for deposition/positioning of an outer sole comprising a first clamping edge at the rim of the support plate; and
- a ring plate which is positioned (flush), at least in some regions, around the support plate and has a sealing surface (a second clamping edge), which can be closed flush with the first clamping edge of the support plate (directly or indirectly, preferably via the outer sole lying between the clamping edges).

In an alternative embodiment of the invention, the ring plate can be a sealing plate.

In a preferred embodiment of the invention, the support plate and the ring plate are configured to clamp (preferably material-tight) the edge region of an outer sole between the sealing surface (second clamping edge) of the ring plate and the first clamping edge at the rim of the support plate, preferably at least in some regions.

In a further preferred embodiment of the invention the support plate comprises an upper molding area, a guiding region on the outer sides and at least in some regions the first clamping edge between the molding area and the guiding region; and
the ring plate comprises on the inside a guiding ring, an inwardly facing mold ring on the upper side and at least in some regions the second clamping edge between the guiding ring and the mold ring;
wherein the support plate and the ring plate are supported by the guiding area in the guiding ring so that they can be displaced relative to each other, preferably in the vertical direction,
wherein support plate and ring plate are preferably configured for a relative movement between an open position of the base stamp and a closed position of the base stamp,
wherein in the open position a distance between the first clamping edge and the second clamping edge is maximum and is suitable for a deposition of the outer sole onto the molding area and the first clamping edge,
wherein, in the closed position, a distance between the first clamping edge and the second clamping edge is minimal and suitable for regionally clamping (and sealing) of the edge region of the outer sole between the first and second clamping edges,
and wherein, in the closed position, an outer limit of a mold cavity of the mold can be formed by non-clamped portions of the upper surface of the outer sole and the mold ring.

In a further preferred embodiment of the invention the distance between the first clamping edge and the second clamping edge (in the molding position) is between 5 and 100 mm, preferably 5 mm to 40 mm, for the open position and/or has a distance between 0 and 5 mm (e.g. the thickness of the outer sole), preferably 0.5 mm to 4.5 mm, for the closed position.

In a further preferred embodiment of the invention, the device comprises at least one lifting cylinder,
wherein the lifting cylinder is configured for a translational movement of the support plate relative to the ring plate and/or the lifting cylinder is configured for a translational movement of the ring plate relative to the support plate (wherein the lifting cylinder can be any element for bringing the support plate and ring plate together, wherein the support and ring plates are held/pressed towards each other preferably during the injection process).

In a further preferred embodiment of the invention the device comprises
- one base plate
- preferably at least one bridge plate,
wherein the lifting cylinder is configured for a translational movement of the ring plate, the support plate is installed on the base plate, the base plate preferably has at least one guiding region for the lifting cylinder and the bridge plate is preferably connected to the lifting cylinder and is configured for a transmission of a movement of the lifting cylinder to the ring plate.

In a further preferred embodiment of the invention, support plate, bridge plate and/or base plate are configured to limit the translational movement of the ring plate between the open position and the closed position.

In a further preferred embodiment of the invention, the mold ring has a shape giving geometry for an outer surface of an intermediate sole foamable/injectable in the mold cavity.

In a further preferred embodiment of the invention the clamping base stamp comprises:
- a recess in the support plate with a third, preferably circumferential clamping edge at the rim of the recess;
- an additional clamping element which is positioned (flush) in the recess and has a second sealing surface (a fourth clamping edge) which can be closed flush with the third clamping edge (directly or indirectly, preferably indirectly via the outer sole lying between the clamping edges).

In a further preferred embodiment of the invention, the clamping element is configured to clamp (preferably material-tight) the edge region of an opening in the outer sole (and/or a recess in the outer sole) between the second sealing surface (fourth clamping edge) and the third, preferably circumferential clamping edge at the rim of the recess in the support plate.

In a further preferred embodiment of the invention, the recess of the support plate comprises an opening in the molding area, a second guiding region on the inside of the recess and the third, preferably circumferential clamping edge between the recess and the second guiding region; the clamping element comprises on the outside a second guiding ring, an outwardly facing second mold ring on the upper side and a fourth, preferably circumferential clamping edge between the second guiding ring and the second mold ring;
wherein the clamping element and the support plate are slidably guided relative to each other by the second guiding ring of the clamping element in the second guiding region of the recess, wherein the support plate and the clamping element are configured for relative movement between the open position of the base stamp and the closed position of the base stamp, wherein, in the open position, a distance between the third clamping edge and the fourth clamping edge is maximum and is suitable for a deposition of the outer sole onto the mold area, the first clamping edge and the third clamping edge,
wherein, in the closed position, a distance between the third clamping edge and the fourth clamping edge is minimum and is suitable for clamping at least in some regions the edge region of the opening of the outer sole between the third and the fourth clamping edge.

Also disclosed herein is a base stamp according to the description.

Also disclosed herein is a molding frame for use in a Direct Soling Machine comprising a device according to the description or a clamping base stamp according to the description and an upper closing element,
wherein the upper closing element is configured, together with the device or the clamping base stamp, preferably in a closed position with the deposited, to form the mold cavity of the mold frame.

The upper closing element can preferably also be described as displacement element.

In a preferred embodiment of the invention, the mold frame comprises a sprue for pouring and/or injecting a midsole material to produce a midsole.

In a further preferred embodiment of the invention, the upper closing element comprises on an external surface of the mold cavity, preferably facing the mold cavity, additional sections with sealing surfaces to separate different areas of the midsole comprising different components and/or mixtures of components having specific physical properties.

In a further preferred embodiment of the invention the mold frame comprises lateral mold frames, wherein the lateral mold frames are configured for an application and/or foaming an inner sole and/or direct adhesive foaming (direct soling) of a shoe upper to the sole.

It is particularly preferred that the lateral mold frame comprises two elements, referred to herein also as the side molding elements or frame halves.

Also disclosed herein is a direct injection process machinery and/or a direct soling machine comprising a device according to the description, a clamping base stamp according to the description and/or a mold frame according to the description.

In a preferred embodiment of the invention, the direct injection process machinery and/or the direct soling machine comprises an injection unit
wherein the injection unit comprises a mixing head for mixing and application of base material of a midsole material which is to be mixed with additives into the mold frame, whereby the midsole can preferably comprise different areas comprising different components and/or mixtures of components with specific physical properties.

In a further aspect the invention relates to a method for manufacturing a shoe and/or a shoe sole, preferably by a device according to the description, a clamping base stamp according to the description, a mold frame according to the description and/or a Direct Injection Process Machinery and/or Direct Soling Machine according to the description, comprising the following steps:
- deposition of an outer sole, patches and/or outer sole fragments on a support plate, preferably in an open position of the base stamp;
- clamping the outer sole, patches and/or outer sole fragments (preferably material-tight) and preferably sealing the outer boundary of the mold cavity of the mold frame formed by the unclamped regions of the upper surface of the outer sole and the mold ring, preferably in a closed position of the base stamp.

In a preferred embodiment of the invention, the method comprises the following additional steps:
- Closing the mold cavity by an upper closing element;
- Pouring, injecting and/or foaming a thermosetting, thermoplastic and/or elastomeric synthetic material, preferably based on polyol and isocyanate, in particular (to form) polyurethane, for the midsole;
- preferably curing of the midsole;
- Preferably (vertically) lifting and subsequent swinging out of the upper closing element (demolding).

In a further preferred embodiment of the invention, the method comprises the following additional steps:
- Swinging in of a (shoe) upper (on a last) and closing (preferably of the lateral mold frames [with {shoe-} upper {on a last}]);
- Pouring, injecting and/or foaming a thermosetting, thermoplastic and/or elastomeric synthetic material, preferably based on polyol and isocyanate, in particular (to form) polyurethane for the insole and a preferred direct adhesive foaming (direct soling) of the shoe upper (to the sole);
- preferably curing of the insole;
- Preferably lowering the base stamp, opening the lateral mold frames, vertical lifting of the last including the directly soled shoe (upper), swinging out and removal of the shoe;
- Preferably post-processing of the cast out.

### DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the method and apparatus within the scope of these claims and their equivalents be covered thereby. All embodiments relating to the collar, Injection molding form system or methods employing such components are intended to be disclosed in the context of each other, such that features of the collar or system may be considered as embodiments of the method, and vice versa.

Without intending to be limiting, the invention will be explained in more detail with reference to exemplary embodiments and the following figure:

### Brief description of the figures:

**Figure 1****:** A schematic representation of the functionality of the new shape concept of a split base stamp including support plate and ring plate as well as other preferred components.
**Figures 2****:** The illustration shows a shoe which can be manufactured with the inventive device and/or process.
**Figure 3** shows a preferred design of the clamping base stamp.
**Figure 4** shows a shoe upper positioned on a raised last in a direct soling machine.
**Figure 5** shows a one-piece base stamp of the state-of-the-art floor with an injection-molded outer sole.
**Figure 6** shows the injection of the insole material into the area of the midsole when the sealing edge is damaged by trimming in conventional production (state of the art).
**Figure 7** show a manual reworking by a cutting tool.
**Figure 8** shows another illustration showing the manual removal of cast out.
**Figure 9** shows a schematic representation of a split base stamp with an additional clamping element for the deposition of patches.
**Figure 10** illustrates the additional clamping element.
**Figure 11** show a (conventionally manufactured) outer sole with apertures or recesses in the outsole.
**Figure 12** shows an outer sole fabricated by the inventive base stamp.
**Figure 13** illustrates the sealing surfaces.
**Figure 14** shows a particular upper closing element for the production of outer soles by means of DIP.
**Figure 15** illustrates a one-piece base stamp punch and an upper closing element for the production of an outer sole.
**Figures 16-18** show a prototype shoe produces by the inventive device/method from different perspectives.
**Figure 19** exemplary shows the three components of the sole separately.
**Figure 20** shows a front view of the outer sole and the midsole.
**Figure 21** shows a rear view of the outer sole and the midsole.
**Figure 22** shows a rear view with the insole on top.
**Figure 23** shows a front view of the outer sole, the midsole and the insole as a top sole layer.
**Figure 24** shows the cast out used for sealing the outer sole and the midsole from the insole material.

### Detailed description of the figures:

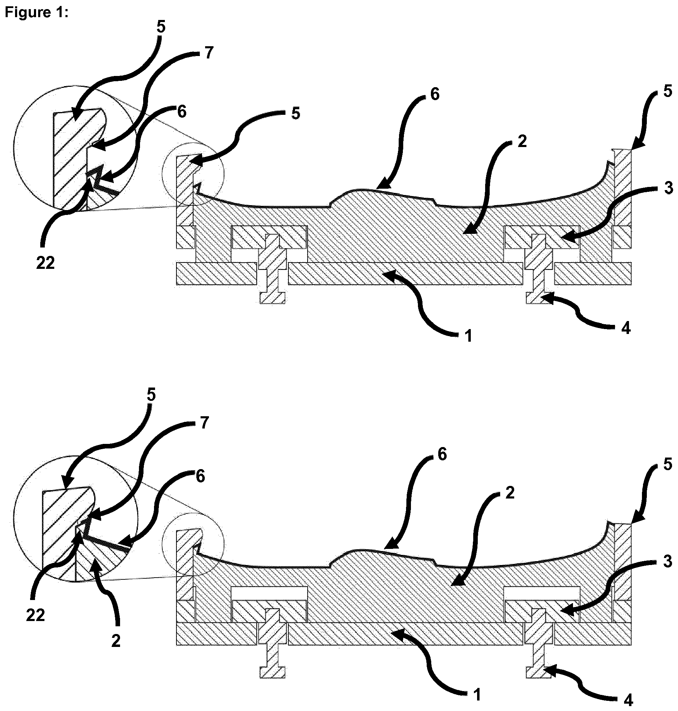

**Figure 1** shows a schematic representation of the functionality of the new shape concept of a split base stamp including support plate **2** and ring plate **5** as well as other preferred components. Shown are open position (top) and closed position (bottom). The numbering of the elements in the figure are employed in the following.

The novel "split base stamp" mold concept preferably consists of the following components:
1. Base plate **1.** It carries the support plate **2** (firmly connected) and guides the lifting cylinders **4.**
2. Support plate **2.** It carries the pre-produced and inserted outsole **6**/patches **15** and limits the lifting movement of the lifting cylinders **4.**
3. Bridge plate **3.** It transmits the lifting movement of the lifting cylinders **4** to the ring plate/sealing plate **5** and, if necessary, to additional clamping elements **16** (these are used, for example, for openings in the outer sole **6.** They have already been described above and are also shown and explained below using an illustration.
4. Lifting cylinder **4.** They transfer the kinetic energy from the machine to the bridge plate **3.**
5. Sealing plate **5** (ring plate). The sealing plate will be moved into an open and a closed position by the lifting movement of the lifting cylinders **4.** In the open position, the outer sole **6** is inserted. In the closed position, the sealing surfaces (clamping edges **6, 7**) on the edge of the inlaid outer sole **6** seal by applying pressure (sealing function). The sealing plate **5** also contains the shape giving geometry (side design) of the lower polyurethane layer/midsole **8.**

An exemplary process for the production of a three-layer, directly soled shoe soles as made possible by the split base stamp is now presented:
1. An outer sole **6** (usually rubber or TPU) is pre-produced.
2. The pre-produced outer sole **6**/patches **15** of an outer sole are inserted into the open, split base stamp.
3. The split base stamp is closed and seals the edge(s) of the deposited/inlaid outer sole **6** (sealing function) by means of the clamping edges **7, 8.**
4. This is followed by the process of a conventional two-layer polyurethane direct soling: a displacement plate/upper closing element **10** closes the cavity from above and the lateral mold frame closes the cavity laterally and centers the upper closing element **10.**
5. Polyurethane is injected into the cavity and the base stamp is lifted for closing the sprue. The underlayer polyurethane of the sole/midsole **8** is formed, which can be designed as a damping element in different zones with different degrees of hardness. This solves a state-of-the-art problem: the midsole **8** reacts in the mold between the upper closing element, the base stamp and preferably the lateral mold frame/side molding elements. Due to the reaction energy, the mold is completely filled and in state-of-the-art molds, injection/application of material beneath the outer sole **6** can occur, making necessary laborious and potentially damaging post-processing. Here, the sealing edges are formed, so that injection below the outer sole **6** is not possible in the next injection process. Furthermore, a seamless midsole **8** can be produced.
6. After the polyurethane has reacted out, the base stamp is lowered, the lateral mold frame is opened, the displacer plate/upper closing **10** element swings out of the mold and a shoe shaft swings into the mold.
7. The frame halves/lateral mold frames close the cavity from the inside and the outside of the shoe upper **11.**
8. Polyurethane is injected into the cavity and the base stamp is lifted for closing the sprue. The upper layer of polyurethane / inner sole **9** of the sole is formed.
9. Once the polyurethane has reacted, the base stamp is lowered, the lateral mold frame is opened, and the finished show with a three-layer sole (consisting of an inlaid rubber or TPU outer sole **6,** a lower layer of polyurethane and an upper layer of polyurethane) is removed from the mold.
10. Finally, the resulting cast **13** out of the two joined polyurethane layers as well as a possible designated sealing edge of the outer sole is trimmed.

One advantage of the process is that there is no need for a casting machine and/or molding components for the casting process to produce the semi-finished sole(s). The previous production process of a three-layer sole (outer sole **6**/patches **15** + midsole **8** + inner sole **9**) is further developed by the technical innovation in the area of the base stamp (two-part production) to the extent that in the area of the midsole **8**/inner sole **9,** injection can no longer take place because the midsole **8** and inner sole **9** can be produced in one mold and no intermediate demolding and manual processing of the midsole **8**/outer sole **6** is necessary. Thus, the sealing edge on the midsole **8** is reliably produced and leads to the absence of these process-related errors.

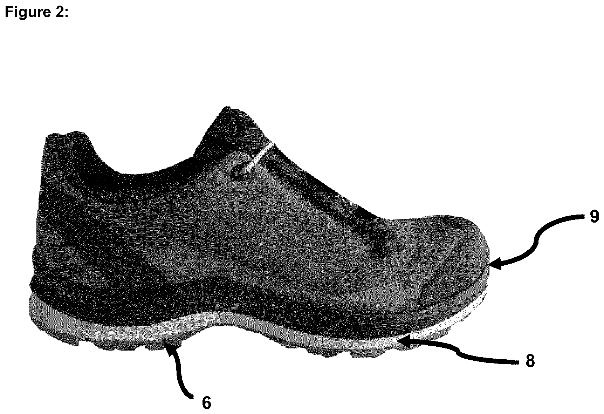

**Figure 2** shows an illustration of a shoe which can be manufactured with the inventive device and/or process. The midsole **8** (lower polyurethane layer) and the insole **9** (upper polyurethane layer) are shown next to the outer sole **6.**

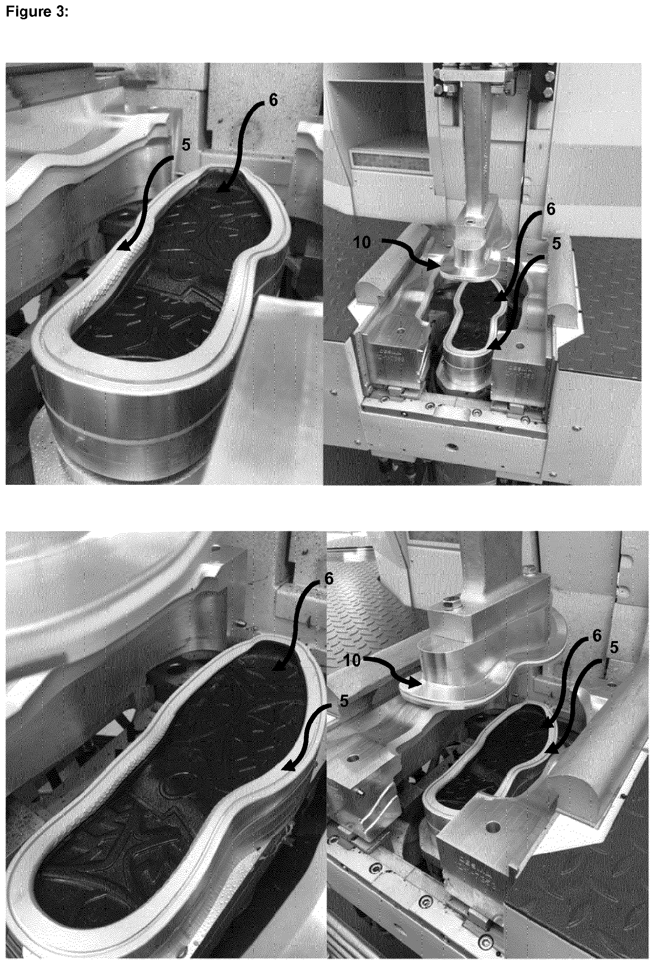

**Figure 3** shows a preferred design of the clamping base stamp. The two illustrations above show the clamping base stamp in an open position with the outer sole **6** deposited/inserted (black). On the right, the upper closing element/displacer plate **10** (above the clamping base punch) is also visible.

The two lower pictures show the clamping base stamp with inserted/deposited outer sole **6** (black) in a closed position, which is clamped by the ring plate. The displacer plate/upper closing element **10** can also be seen on the right.

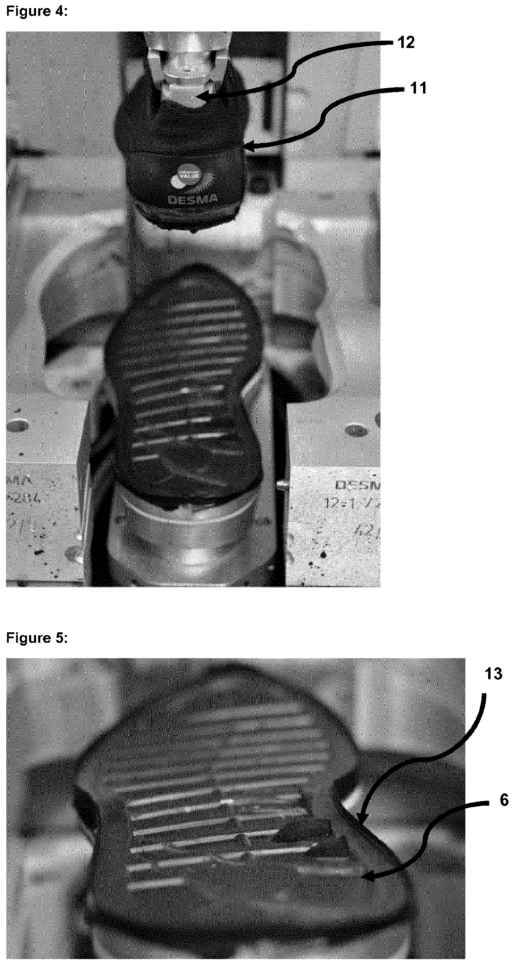

**Figure 4** shows a shoe upper **11** positioned on a raised last **12** in a direct soling machine.

**Figure 5** shows a one-piece base stamp of the state-of-the-art with an injection-molded outer sole **6** and the resulting state-of-the-art sprouting/cast out **13.** In this process, this cast out **13** ensures that the midsole material to be applied afterwards (with three-layer production) or the innersole material (with two-layer production) does not get under the outer sole **6** (=injection). After the shoe has been demolded, this cast out/sprout **13** is then removed/trimmed again. This can result in defects that cause so-called underinjection. The step in which trimming the cast out **13** of a "pre-produced" two-piece sole, which can lead to defects / "damage" and can cause under-spraying is no longer necessary when using the split base stamp.

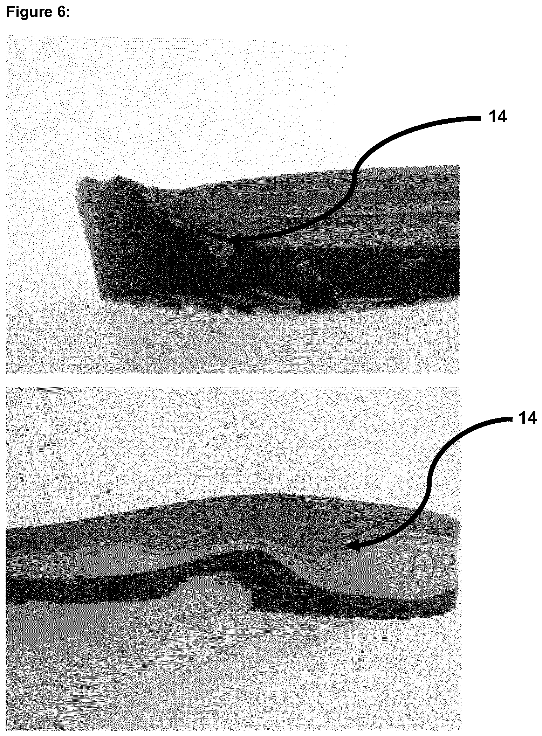

Cast out **13** is partly technically necessary and desired for state-of-the-art devices and processes and can be removed by post-processing. However, this can result in defects that cause underinjection. Manual reworking is no longer possible with injection molding, as the materials combine in this process, see also figure **6****.**

**Figure 6** shows the injection of the insole material into the area of the midsole **8** when the sealing edge is damaged by trimming in conventional production (state of the art), This is shown here by the fact that insole material gets **14** into the area of the midsole or midsole **8** and outsole **9** at a damaged point (upper picture).

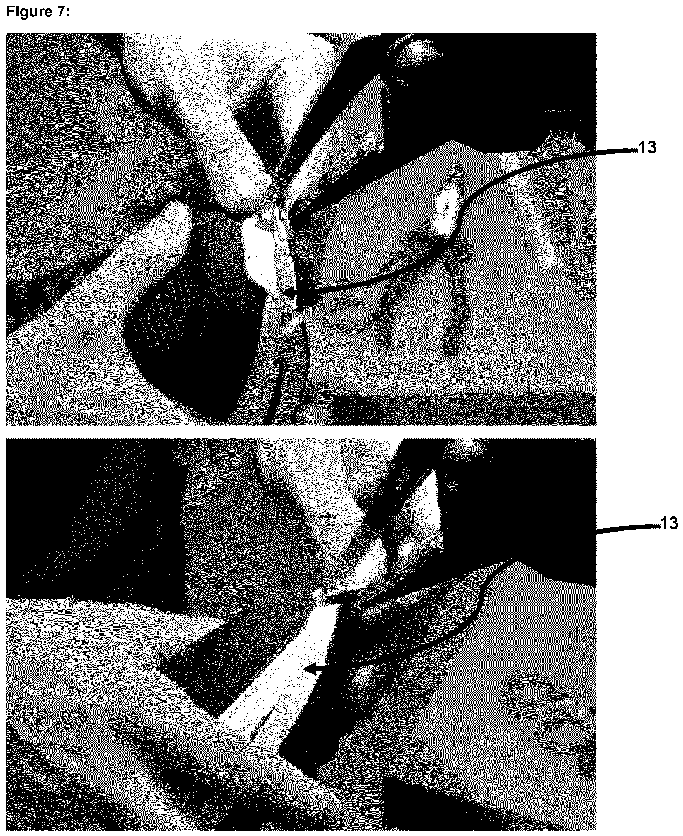

**Figure 7** shows show a manual reworking by a cutting tool, where the cast out **13** of the insole **9** has to be removed (see e.g. step 10 of the direct soling process).

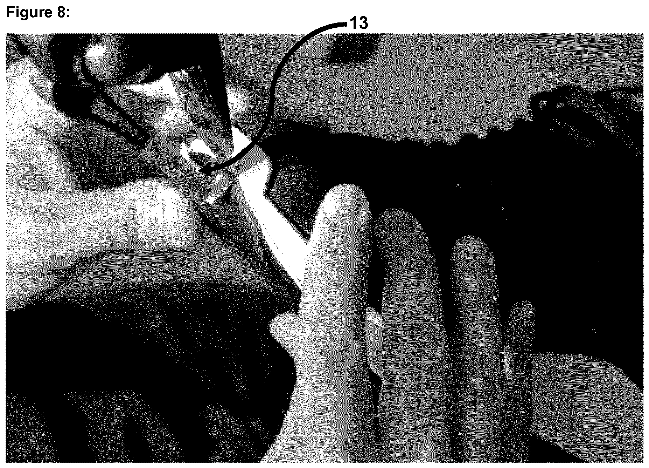

**Figure 8** shows another illustration showing the manual removal of cast out **13.**

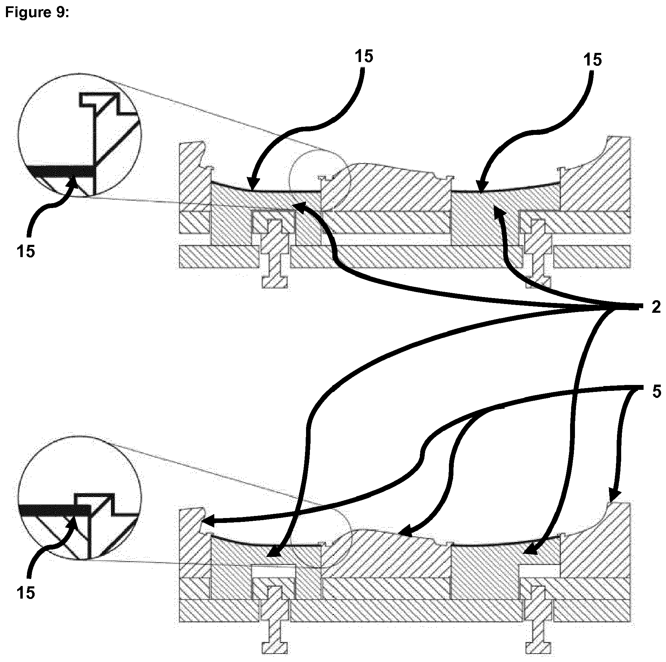

**Figure 9** shows a schematic representation of a split base stamp, preferably with an additional clamping element **16** for the deposition of patches **15.** (A) (smaller) support plate or plates **2** for the deposition of outer sole patches **15.** The plate can be formed
1) in one single part with a recess in the middle for deposition of a single outer sole **6** which features a recess **17** in the middle or
2) as several plates, e.g. two, which can be used for the deposition of patches **15.**

Also shown is the ring plate or sealing plate **5,** which also comprises an element arranged between the support plate(s) **2.** This element can be formed in one piece with the outer part of the sealing plate **5** (option 2) of outer soles patches **15** and more than one support plate) **2** or as additional clamping element **16** positioned in the recess of the support plate **2** (option 1) above).

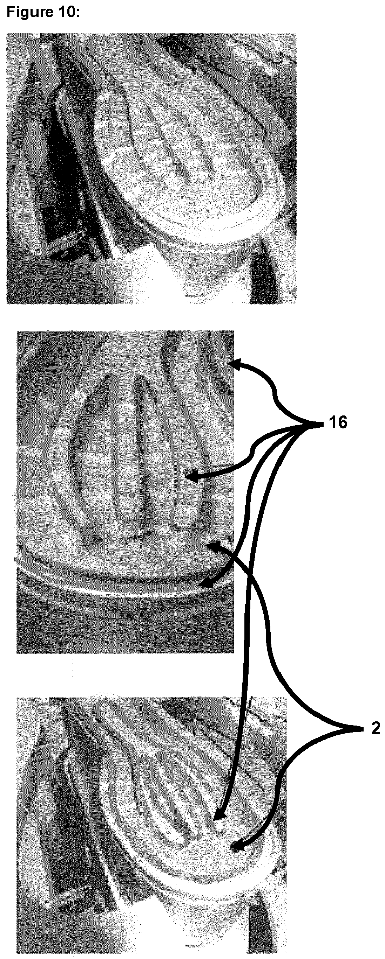

**Figure 10** illustrates the additional clamping element **16.** The illustrations show the base stamp including a clamping element **16** for sealing outer sole patches **15** and in particular recesses **17** in an insertable outer sole **6** which have a form approximately of the clamping element **16.** On the right, the support plate **2** including preferred recesses **17** and the surrounding (fourth) clamping edge (or sealing element) of the clamping element **16** can be seen.

In general, this mold concept is suitable both for the deposition of full-surface outer soles **6** for running and/or insole and for the insertion of partial inlays (patches) **15** as described in the illustrations above.

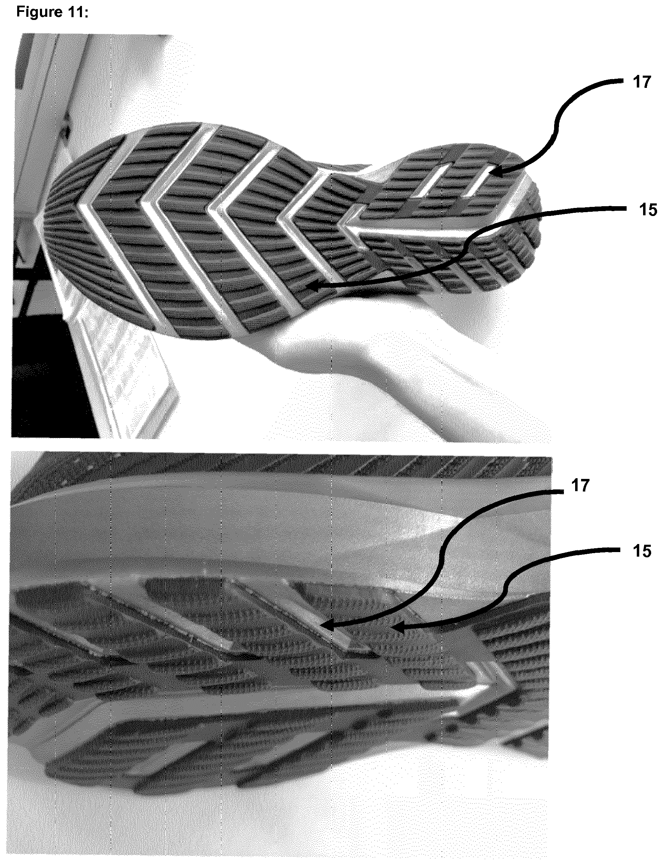

**Figure 11** shows a (conventionally manufactured) outer sole (black) with recesses or cut-outs **17** in the outer sole (grey) as well as outer sole patches **15.** First, the midsole **8** was cast/poured in one layer (not Direct Injection Processing) as shown in the illustrations (grey wedge) and wrapped with foil (silver foil, thermoplastic) over the entire surface (optical reasons to hide production disadvantages of the casting/pouring). The outer sole fragments (black rubber profile patches) **15** are then glued to the midsole **8** by hand, so that the outer sole **6** and midsole **8** combination can then also be glued to the shoe upper **11** by hand (conventional state-of-the-art process).

With preferably a slightly modified geometry of the outer sole **6,** such an outer sole fragment/patch **15,** or such outer sole fragments/patches **15** can now be clamped (clamping elements **16**)**,** overmolded (= DIP) and directly soled by use of the split base stamp. Even if a solid DIP injected shoe does not require any foiling, since the skin / surface usually has very good optical characteristics, a fully comprehensive foiling is also possible.

By means of sealing surfaces **18** on the displacer/upper closing element **10** side, the polyurethane (preferably the midsole **8**) can be partially applied to the outer sole **6,** for example in the form of patches **15.** This results in greater design freedom that can be used to improve ergonomic aspects of the shoe sole. For example, a layer of polyurethane can have a higher degree of hardness and, if placed appropriately, can be used as a pronation support or joint stiffener.

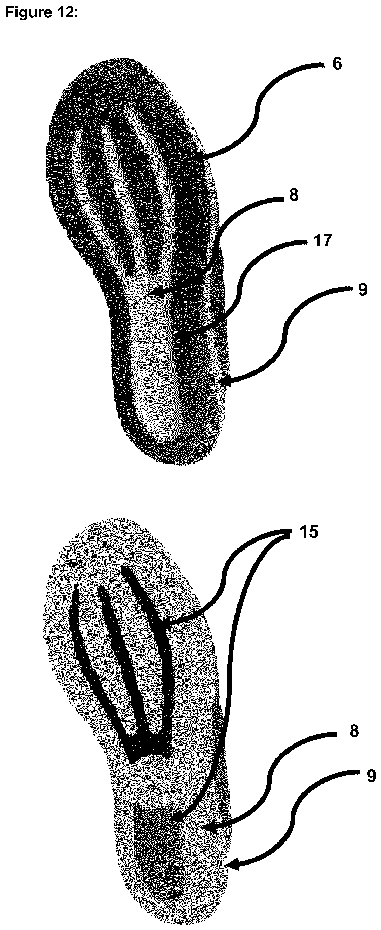

**Figure 12** shows an outer sole **6** fabricated according to option 1) (above) of option 2) (below) shown above in the context of figure 9. In option 1), the following steps of production can be implemented using the inventive base stamp:
- a (black) outer sole **6** can be deposited on the support plate **2** with a recess **17.**
- Then the midsole **8** can be applied (injection/pouring). Due to the additional clamping element **16** approximately situated in the recess **17** during production, an unwanted injection of midsole 8 material below the outer sole **6** in the recess **17** can be prevented.
- Finally, the inner sole material **9** can be applied (injection/pouring). Because of the sealing/clamping of the outer sole **6,** no postprocessing is necessary, which could cause damage during this process. By this final step, the shoe upper **11** can also be combined with the sole.

Option 2 involves the following steps of production:
- Two black patches **15** of the outer sole are deposited on the support plates having approximately the same shapes as the patches **15.**
- Then, the midsole **8** material can be injected/poured. The sealing plate **5** seals the outer areas of the patches so that no injected material is applied at unwanted regions below the patches **15.**
- Therefore, no post-processing is necessary before the inner sole **9** is injected/poured, which combines the sole at the same time with the shoe upper **11.**

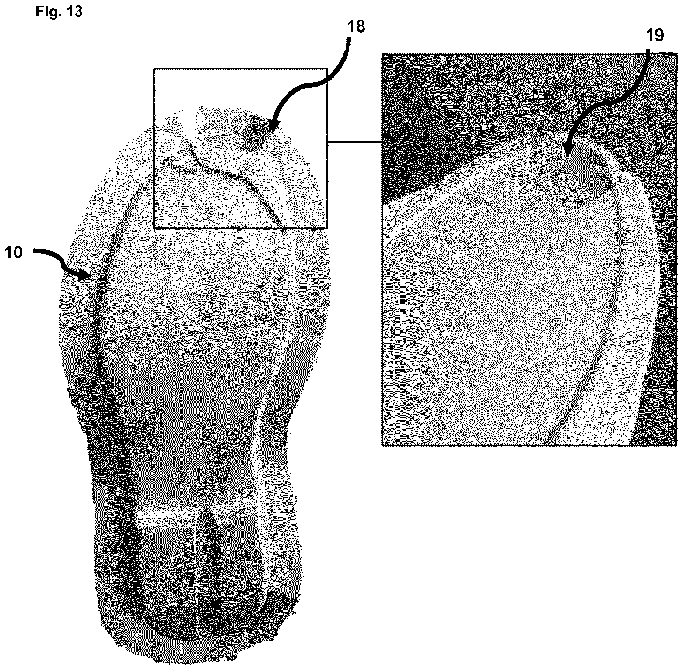

**Figure 13** illustrates the sealing surfaces **18** already described above. This illustration shows in the upper section displacement plates (upper closing elements 10) with sealing surfaces **18,** which are designed so that this marked area is not foamed with midsole material. This area could then e.g. be part of a later applied inner sole **9.** On the right side, a corresponding midsole **8** is shown, which features a recess in the toe region of the sole due to the application of the sealing surfaces **18.** This recess can e.g. be filled with different midsole material or directly with insole material, depending on the preferences for the produced shoe.

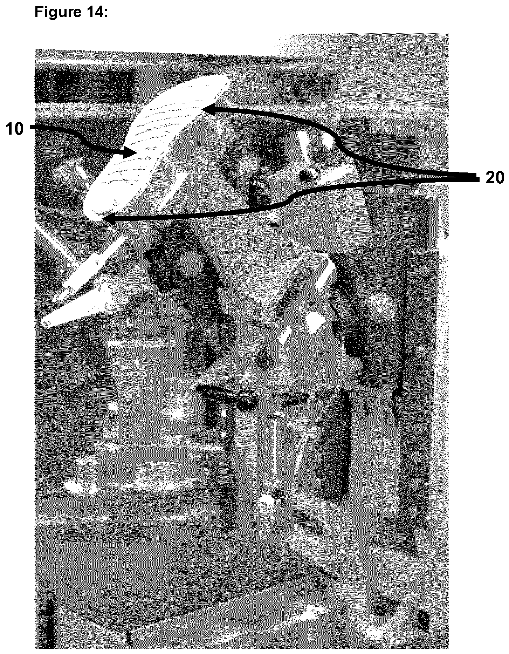

**Figure 14** shows a particular upper closing element **10** for the production of outer soles **8** by means of DIP (PU outer soles), but the principle can be transferred to the upper closing element **10** described above, e.g. in the previous example and for the injection of intermediate soles (midsoles) and/or inner soles:
The displacer plate **10** is swung into the mold frame (as can be seen for upper closing element **10** to the left, which is swung in by a 180° rotation of the rotary head with mounted displacer plate/upper closing element **10**) and lowered, so that the circumferential edge **20** is displaced such that a preset distance to the base stamp is reached, which determines the amount of cast out **13.**

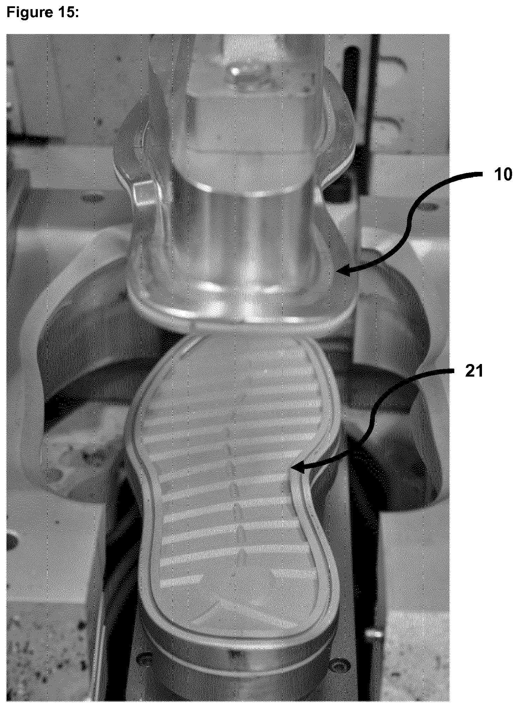

**Figure 15** illustrates a one-piece base stamp **21** and an upper closing element **10** for the production of an outer sole **8.** If the upper closing element **10** and the base stamp are at a defined distance from each other (this defines the sole thickness) and if the lateral mold frames are closed around the upper closing element **10,** injection can be started and the material is distributed in the remaining cavity.

The principle can be analogously applied to the multi-layer midsole **8** and insole injection **9** as described previously, this means that the upper closing element **10** shown previously sealing particular regions from above, the inlaid outer sole **6** clamped by the base stamp below and laterally the lateral mold frame(s) form the sealed cavity for the injection of the first layer of the midsole **8.** For this purpose, it is important that the sealing is really material tight (=minimum sprouting/cast out **13** which takes place mainly to degas the exothermically reacting PU material). Otherwise, the PU material, which foams strongly and for a significant period of time, foams areas below the outer sole **6**/the inlaid patches **15** and thus does not achieve the desired horizontally arranged sectioning (of material) within the sole.

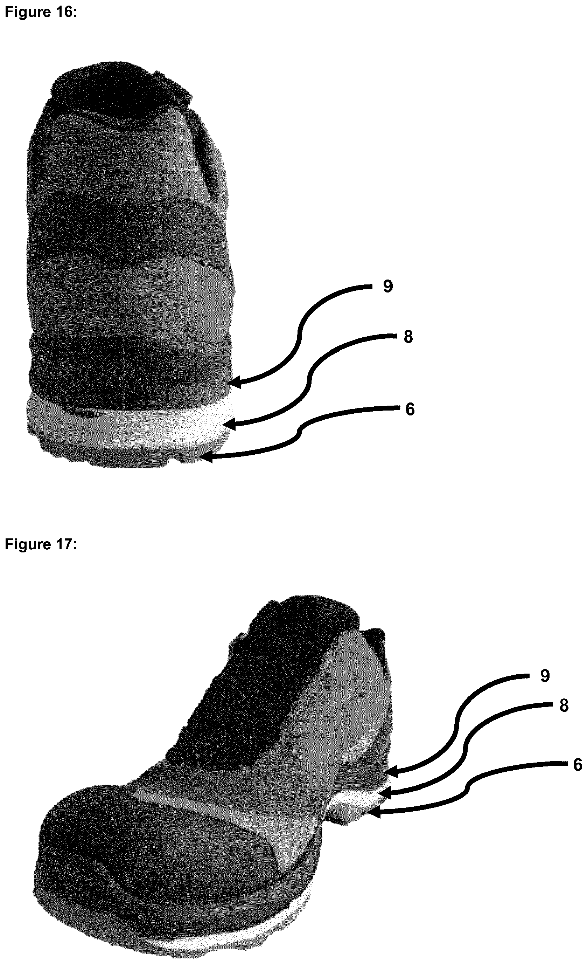

**Figures 16-18** show a prototype shoe produces by the inventive device/method from different perspectives. The shoe with a three layer sole (below the outer sole **6,** on top of it the midsole **8** and black inner sole /insole **9** as uppermost element of the complete sole) can be fabricated in one automated process without interruption by any necessary manual steps on the product itself in between. The shoe upper **11** can be directly combined by injection/pouring of the inner sole **9** on the cured midsole **8** while the shoe upper **11** is applied from above. Due to the clamping and sealing of the outer sole **6** during the application of the midsole **8,** there is no need for a manual post-processing before application of the inner sole **9** as in the state-of-the-art.

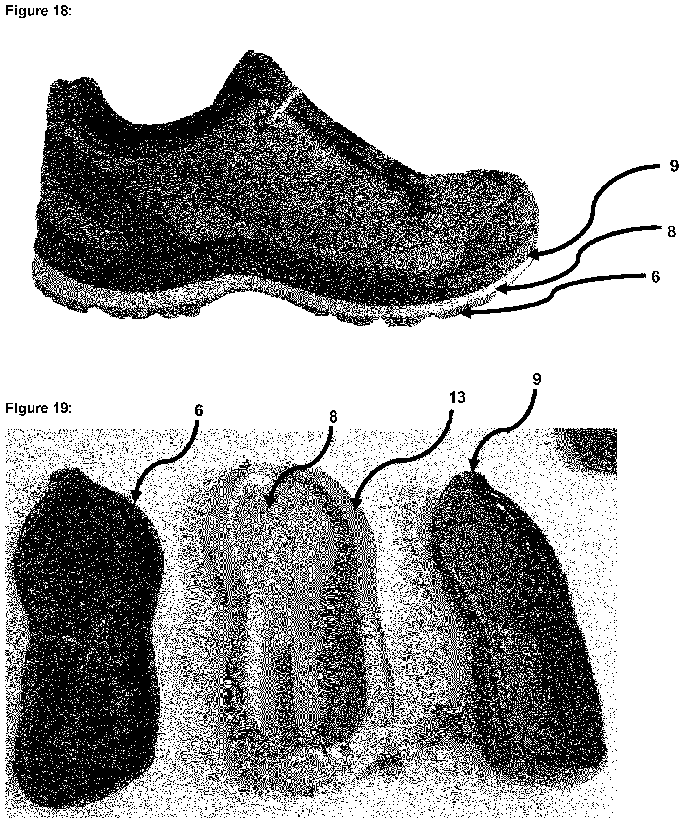

**Figure 19** exemplary shows the three components of the sole separately. To the left, the outer sole **6** is shown, which is typically produced in a separate process and is then deposited on the base stamp on the beginning of the production process.

In the middle, the produced midsole **8** is shown, for illustration purposes without the outer sole **6** on which it is usually applied. The cast out **13** on the upper parts of the midsole **8** is desirable and does not result from unsealed areas between outer sole **6** and the mold cavity but depends on the adjustable distance of the upper closing element **10** (displacement plate) to the elements of the lateral mold frame. This cast out helps sealing all areas of the midsole **8** below the cast out, such that preferably no material of the insole **9** reaches those areas.

To the right, the insole or inner sole **9** is shown, for illustration purposes as a separate element. Normally, it would be applied to the midsole **8** and the shoe upper **11** would be applied on top.

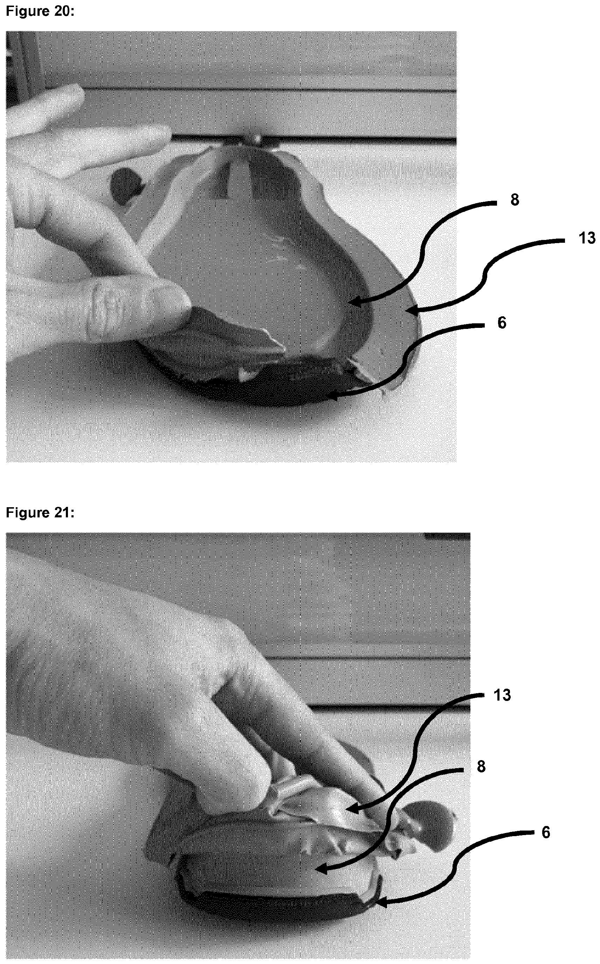

**Figure 20** shows a front view of the outer sole **6** (lower black element in the front which is bent upwards for the production of running shoes) and the midsole **8** with its cast out **13** overlapping to the sides

**Figure 21** shows a rear view of the outer sole **6** (black) and the midsole **8** (grey) with cast out **13.**

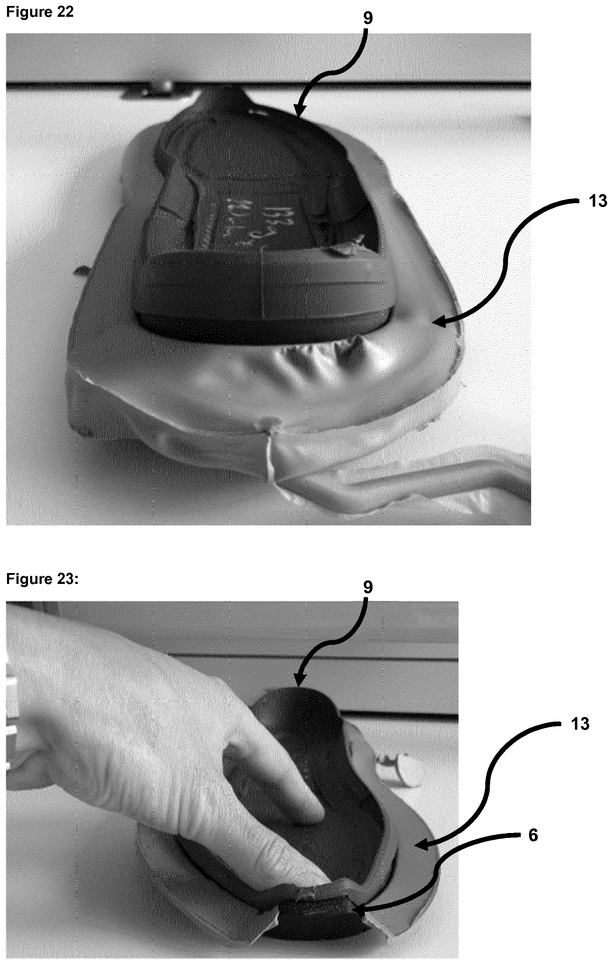

**Figure 22** shows again a rear view, this time also with the insole **9** (black) on top. The inner sole **9** can be applied directly to the midsole **8** by pouring/injection of the insole material. The cast out **13** of the midsole **8** acts as sealing element, such that no insole material reaches the areas of the midsole **6** and/or outer sole **6** below. The cast out **13** from the sprue can be seen as well.

**Figure 23** shows another front view of the outer sole **6** (lower black element in the front which is bent upwards for the production of running shoes) and the midsole **8** with its cast out **13** overlapping to the sides, this time with the insole **9** as a top sole layer.

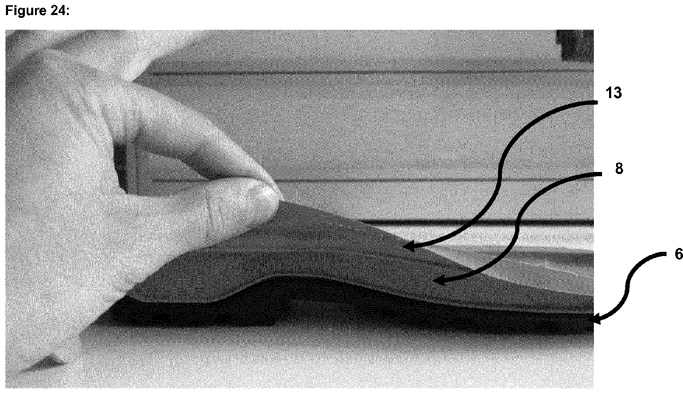

**Figure 24** shows the cast out **13** used for sealing the outer sole **6** and the midsole **8** from the insole material.

### Reference signs:

Base plate (1).
Support plate (2).
Bridge plate (3).
Lifting cylinder (4).
Sealing plate (5) (ring plate).
Outsole (6)
Second clamping edge (7)
Midsole (8)
Insole (9)
Upper closing element (10)
Shoe upper (11)
Last (12)
Cast out (13)
(Unwanted) insole material (14)
Outer sole patches/fragments (15)
Clamping element (16)
Recesses/cut-outs (17)
Sealing surfaces (18)
Recess in the midsole (19)
Circumferential edge of upper closing element (20)
One-piece base stamp (21)
First clamping edge (22)

## Claims

1. A device, comprising a clamping multi-part base stamp of a mold frame for a direct injection process machinery and/or a direct soling machine, wherein the base stamp comprises:
- a support plate (2) for deposition of an outer sole (6), the support plate (2) comprising a first clamping edge (22) at the rim of the support plate (2); and
- a sealing plate (5) which is positioned, at least in some regions, around the support plate (2) and which has a second clamping edge (7), which can be closed flush with the first clamping edge (22) of the support plate (2) directly or indirectly, preferably indirectly via the outer sole (6) lying between the first (22) and second (7) clamping edges.

2. Device according to the preceding claim,
**characterized in that**
the support plate (2) and the sealing plate (5) are configured to clamp, preferably material-tight, the edge region of an outer sole (6) between the first clamping edge (22) at the rim of the support plate (2) and the second clamping edge (7) of the sealing plate (5), preferably at least in some regions.

3. Device according to any one of the preceding claims,
- wherein the support plate (2) comprises an upper support area and a guiding region on an outer lateral surface, and wherein at least in some regions the first clamping edge (22) is positioned between the support area and the guiding region; and
- wherein the sealing plate (5) comprises an inner lateral surface, a guiding element and an inwardly facing upper mold section, and wherein at least in some regions the second clamping edge (7) is positioned between the guiding element and the upper mold section;
**characterized in that**
the support plate (2) and the sealing plate (5) are positioned by the guiding region and the guiding element, such that they can be displaced relative to each other, preferably vertically,
wherein the support plate (2) and sealing plate (5) are preferably configured for a relative movement between an open position of the base stamp and a closed position of the base stamp, wherein in the open position a distance between the first clamping edge (22) and the second clamping edge (7) is maximal and is suitable for deposition of the outer sole (6) onto the support area and the first clamping edge (22), wherein, in the closed position, a distance between the first clamping edge (22) and the second clamping edge (7) is minimal and suitable for at least in some regions clamping and preferably sealing of the edge region of the outer sole (6) between the first (22) and second (7) clamping edges,
and wherein, in the closed position, one or more internal walls of a cavity within the mold form are formed by non-clamped portions of the upper surface of the outer sole (6) and the upper mold section.

4. Device according to claim 3,
**characterized in that**
the distance between the first clamping edge (22) and the second clamping edge (7) is 5 to 100 mm, preferably 5 mm to 40 mm, for the open position and/or exhibits a distance of 0 to 5 mm, preferably 0.5 mm to 4.5 mm, for the closed position.

5. A device according to one of the preceding claims, comprising at least one lifting cylinder (4),
**characterized in that**
the lifting cylinder (4) is configured for a translational movement of the support plate (2) relative to the sealing plate (5) and/or the lifting cylinder (4) is configured for a translational movement of the sealing plate (5) relative to the support plate (2).

6. A device according to the preceding claim, comprising
- a base plate (1), and
- preferably at least one bridge plate (3),
**characterized in that**
the lifting cylinder (4) is configured for a translational movement of the sealing plate (5), the support plate (2) is installed on the base plate (1), the base plate (1) preferably has at least one guiding region for the lifting cylinder (4) and the bridge plate (3) is preferably connected to the lifting cylinder (4) and is configured for a transmission of movement from the lifting cylinder (4) to the sealing plate (5).

7. A device according to any one of the preceding claims, wherein the clamping base stamp comprises:
- a recess in the support plate with a third, preferably surrounding, clamping edge at the rim of the recess; and
- an additional clamping element (16) which is positioned (flush) in the recess and has a fourth clamping edge, which can be closed flush with the third clamping edge, directly or indirectly, preferably indirectly via the outer sole (6) positioned between the clamping edges.

8. Device according to the preceding claim,
**characterized in that**
the clamping element is configured to clamp, preferably material-tight, the edge region surrounding an opening in the outer sole (6) and/or a recess (17) in the outer sole (6) between the fourth clamping edge and the third, preferably surrounding, clamping edge at the rim of the recess in the support plate (2).

9. Device according to claims 7 or 8, wherein
- the recess of the support plate (2) comprises an opening in the support area and a second guiding region on the inside of the recess, and wherein the third, preferably surrounding, clamping edge is positioned between the support plate (2) and the second guiding region;
- the clamping element (16) comprises on the outside a second guiding element and an outwardly facing upper second mold section, and wherein a fourth, preferably surrounding, clamping edge is positioned between the second guiding element and the second mold section;
**characterized in that**
the clamping element (16) and the support plate (2) are guided to slide relative to each other by the second guiding element of the clamping element (16) in the second guiding region of the recess, wherein the support plate (2) and the clamping element (16) are configured for relative movement between the open position of the base stamp and the closed position of the base stamp, wherein, in the open position, a distance between the third clamping edge and the fourth clamping edge is maximum and is suitable for a deposition of the outer sole (6) onto the support area, the first clamping edge (22) and the third clamping edge, wherein, in the closed position, a distance between the third clamping edge and the fourth clamping edge is minimal and is suitable for clamping at least in some regions the edge region of the outer sole (6) between the third and the fourth clamping edges, in particular the edge region surrounding the opening in the outer sole (6) and/or the recess (17) in the outer sole (6).

10. A mold frame for use in a direct soling machine comprising a device according to one or more of claims 1-9 and an upper closing element (10),
**characterized in that**
the upper closing element (10) is configured, together with the device, preferably in a closed position with the deposited outer sole, (6) to form the mold cavity of the mold frame.

11. Mold frame according to claim 10,
**characterized in that**
the upper closing element (10) comprises on an external surface, preferably facing the mold cavity thereby forming an inner surface of the cavity, additional sections with sealing surfaces (18) to separate different areas of the midsole (8) comprising different components and/or mixtures of components having specific physical properties.

12. Mold frame according to any one of claims 10 or 11, comprising a lateral mold frame,
**characterized in that**
the lateral mold frame being configured for injecting a foamable material of an inner sole (9) and/or direct adhesive foaming and/or direct soling of a shoe upper (11) to the sole, wherein the lateral mold frame preferably comprises a sprue for injecting a thermoplastic sole material into the cavity.

13. A direct injection process machinery and/or a direct soling machine, comprising a device according to any one of claims 1-9 and/or a mold frame according to any one of claims 10-12.

14. Method for manufacturing a shoe and/or a shoe sole, preferably by a device according to any one of claims 1-9, a mold frame according to anyone of claims 10-12 and/or a direct injection process machinery and/or direct soling machine according to claim 13, comprising the following steps:
- deposition of an outer sole (6), patches (15) and/or outer sole fragments on a support plate (2), preferably in an open position of the base stamp;
- clamping the outer sole (6), patches (15) and/or outer sole fragments, preferably material-tight and preferably sealing the outer boundary of the mold cavity of the mold frame formed by the unclamped regions of the upper surface of the outer sole (6) and the mold element, preferably in a closed position of the base stamp.

15. A method according to the preceding claim for injecting and/or foaming of a midsole (8), comprising the following additional steps:
- closing of, preferably by swinging down, an upper closing element (10);
- closing the mold cavity by a lateral mold frame;
- injecting and/or foaming a thermosetting, thermoplastic and/or elastomeric synthetic material, preferably based on polyol and isocyanate, in particular polyurethane, for the midsole (8);
- preferably raising of the base stamp and/or closing of a sprue;
- preferably curing the midsole material;
- preferably opening the mold cavity by opening the mold frame;
- preferably lifting of, preferably by swinging out, the upper closing element (10).

16. A method according to claim 15, for pouring the midsole (8), comprising the following steps:
- closing the mold cavity by the lateral mold frame;
- preferably raising the base stamp;
- pouring of a thermosetting, thermoplastic and/or elastomeric synthetic material, preferably based on polyol and isocyanate, in particular polyurethane, for the midsole (8);
- closing of, preferably by swinging down, the upper closing element (10);
- preferably curing of the midsole (8);
- preferably lifting of, preferably by swinging out, the upper closing element (10);
- preferably lowering of the base stamp;
- preferably opening the lateral mold frame.

17. A method according to any one of claims 14 to 16 for injecting and/or foaming an insole (9), comprising the following steps:
- swinging in and/or lowering of a shoe upper (11) on a last (12) and closing of the lateral mold frames with the shoe-upper (11) on the last (12);
- injecting and/or foaming of a thermosetting, thermoplastic and/or elastomeric synthetic material, preferably based on polyol and isocyanate, in particular polyurethane, for the insole (9) and a preferred direct adhesive foaming and/or direct soling of the shoe upper (11) to the sole;
- preferably raising of the base stamp and/or closing of the sprue;
- preferably curing of the insole (9);
- preferably opening the base stamp into an open position;
- preferably lowering the base stamp, opening the lateral mold frames, lifting of the last (12) including the directly soled shoe upper (11), preferably swinging out, and removal of the shoe;
- preferably post-processing of the shoe sole.

18. A method according to any one of claims 14 to 17 for pouring an insole (9), comprising the following steps:
- swinging in and/or lowering of a shoe upper (11) on a last (12) and closing of the lateral mold frame with the shoe-upper (11) on the last (12);
- preferably raising of the base stamp;
- pouring of a thermosetting, thermoplastic and/or elastomeric synthetic material, preferably based on polyol and isocyanate, in particular polyurethane for the insole (9) and a preferred direct adhesive foaming and/or direct soling of the shoe upper (11) to the sole;
- preferably curing the insole (9);
- preferably opening the base stamp into an open position;
- preferably lowering the base stamp, opening the lateral mold frame, lifting of the last (12) including the directly soled shoe upper (11), preferably by swinging out, and removal of the shoe;
- preferably post-processing of the shoe sole.
